# EUROPEAN PATENT APPLICATION

(11) **EP 4 202 069 A1**
(43) Date of publication of application: **28.06.2023**
(21) Application number: 22216347.9
(22) Date of filing: 23.12.2022
(51) Int. Cl.: C22B 7/00, C22B 11/00, B01D 1/22, G01N 1/28

(54) **METHOD FOR OPTIMISING LIQUID PHARMACHEMICAL AND/OR FINE CHEMICAL WASTE CONTAINING ORGANIC SOLVENTS AND NOBLE METALS**

(30) Priority: 24.12.2021 BE 202106062
(71) Applicant: Indaver nv, 9130 Beveren (BE)
(72) Inventor: KOYEN, Niels, 9130 Beveren (BE); VAN ZUNDERT, Wouter, 9130 Beveren (BE)
(74) Representative: Brantsandpatents bv

(57) **Abstract**

Method for optimizing liquid pharmachemical and/or fine chemical waste comprising organic solvents and noble metals, in particular platinum-group metals, such as platinum, palladium, rhodium and/or ruthenium, comprising the following sequential steps: screening the liquid waste by composition, introducing the liquid waste into a feed tank, adding one or more additives to the liquid waste, and introducing the mixture of liquid waste and one or more additives into a distillation installation comprising an evaporator, wherein the liquid waste is converted in the evaporator into a vapor fraction comprising organic solvents and a concentrated residual fraction comprising noble metals, in particular platinum-group metals, such as platinum, palladium, rhodium and/or ruthenium. In particular, the one or more additives will be one or more high-boiling organic solvents, suitable for keeping the residual fraction liquid during the evaporation in the evaporator.

## Description

### TECHNICAL FIELD

The invention relates to a method for optimizing liquid pharmachemical and/or fine chemical waste, more particularly liquid waste comprising organic solvents and noble metals.

### PRIOR ART

Homogeneous catalysts are increasingly used in the pharmachemical and/or fine chemical industry thanks to their specific properties, such as selectivity and activity, which make new chemistry possible. Homogeneous catalysts are catalysts that are in the same phase as the reactants. In the pharmachemical and/or fine chemical industry, these catalysts often consist of organometallic complexes that are dissolved in the reaction mixture. Certain homogeneous catalysts contain valuable metals, such as noble metals. Noble metals are rare elements of high economic value. The most commonly used noble metals for homogeneous catalysts are platinum-group metals, such as palladium, rhodium, platinum and/or ruthenium. After the reaction, the catalysts end up in the liquid phase of the waste materials where they can break down or decompose. This liquid phase largely consists of organic solvents. These fluids typically have complex compositions and can be flammable, toxic or corrosive.

Recovery of this type of metals from waste is therefore an ecologically and economically interesting solution for large-scale industry. Concentrations as low as a few ppm can be economical to recover. Moreover, solvent recovery is also of great ecological and economic importance. This waste therefore often undergoes further processing and reprocessing in a distillation installation.

The processing of liquid waste from the pharmachemical and/or fine chemical industry often takes place in a distillation installation. The focus here is often on solvent recycling, wherein a vapor fraction and a residual fraction are separated. However, if valuable components are to be recovered from both fractions, the waste must be optimized in advance for efficient processing in the distillation installation so that after evaporation both fractions are in the correct matrix. In addition, it is important that no residues remain in the distillation unit or sticks to parts of the distillation unit, causing it to clog.

DE4210027 relates to a process for the recovery of rhodium from acetic anhydride-containing residues obtained in the carbonylation of methanol and/or methyl acetate and/or dimethyl ether. GB2548976 describes an apparatus and process for recovering a homogeneous rhodium catalyst from a stream recovered from a hydroformylation reactor.

Known methods are lacking for optimizing specific liquid pharmachemical and/or fine chemical wastes, more in particular liquid waste comprising organic solvents and noble metals, in particular platinum-group metals, such as platinum, palladium, rhodium and/or ruthenium prior to processing thereof in a distillation installation, taking into account both noble metals recovery and solvent recycling without the need for energy-intensive pre-treatment steps or without the need to split the process.

There is thus a need for a method for optimizing liquid waste from the pharmachemical and/or fine chemical industry comprising organic solvents and noble metals, in particular platinum-group metals, such as platinum, palladium, rhodium and/or ruthenium prior to their processing in a distillation installation. The present invention aims at least to solve the above-mentioned problem. The object of the invention is to provide a method which eliminates this drawback.

### SUMMARY OF THE INVENTION

In a first aspect, the present invention relates to a method according to claim 1.

This method aims to provide a method for optimizing liquid waste prior to its processing, more preferably waste from the pharmachemical and/or fine chemical industry, comprising organic solvents and noble metals, in particular platinum-group metals, such as platinum, palladium, rhodium and/or ruthenium, wherein one or more high-boiling solvents are used to keep the residual fraction in the evaporator, preferably the thin film evaporator, liquid. This method is particularly advantageous because the residual fraction in which the noble metals precipitate is kept liquid, as a result of which fewer residues stick to the parts of the evaporator, preferably the thin film evaporator, the residual filling is promoted and the further reprocessing of the residual fraction is facilitated. Moreover, the addition of one or more high-boiling solvents has little influence on the composition of the vapor fraction and its possible sequential upgrading to reusable organic solvents.

Preferred embodiments of the method are set out in claims 2-14.

In a second aspect, the present invention relates to a use according to claim 15.

This use results in an ecologically and economically advantageous optimization of liquid pharmachemical and/or fine chemical waste, more particularly liquid waste comprising organic solvents and noble metals. The use allows to optimize a specific pharmachemical and/or fine chemical waste stream prior to processing in an evaporator, preferably a thin film evaporator, so that both organic solvents and noble metals, more in particular platinum-group metals, such as platinum, palladium, rhodium and/or ruthenium can be optimally recovered.

### DETAILED DESCRIPTION

Unless otherwise defined, all terms used in the description of the invention, including technical and scientific terms, have the meaning as commonly understood by a person skilled in the art to which the invention pertains. For a better understanding of the description of the invention, the following terms are explained explicitly.

The term "residual fraction" refers to the concentrate fraction obtained after evaporation.

The term "feed tank" is intended to mean any tank suitable for holding liquid waste, and suitable for feeding that liquid waste to an evaporator, such as storage tanks.

The terms "wastes" and "liquid wastes" as used in the text all refer to liquid pharmachemical and/or fine chemical wastes, which are the subject of the present invention.

The term "noble metals" as used in the text refers to elements that are generally regarded as noble metals in the art, namely ruthenium (Ru), rhodium (Rh), palladium (Pd), osmium (Os), iridium (Ir), platinum (Pt), gold (Au) and silver (Ag). The term "noble metals, in particular platinum-group metals" as used in the text refers to noble metals belonging to the platinum-group metals, namely ruthenium (Ru), rhodium (Rh), palladium (Pd), osmium (Os), iridium (Ir), platinum (Pt).

The term "distillation installation", as used in the text, refers to an installation suitable for separating components or substances from a liquid mixture by means of (selective) boiling and possibly condensation. A distillation installation preferably comprises an evaporator and a condenser. The liquid mixture, in this context the liquid wastes, is separated into a vapor fraction and a residual fraction (or concentrate fraction) in the evaporator, after which the vapor fraction is condensed in the condenser. Non-limiting examples of evaporators are thin film evaporator, falling film evaporator, short path evaporator, and batch evaporator.

The term "condenser" as used in the text refers to a heat exchanger used to at least partially condense a gaseous substance, in this context a vapor fraction, into a liquid state by cooling.

The unit "barg" refers to the gauge pressure, namely the measured pressure, as measured by a barometer, considered in relation to atmospheric pressure.

In this document, "a" and "the" refer to both the singular and the plural, unless the context presupposes otherwise. For example, "a segment" means one or more segments.

When the term "around" or "about" is used in this document with a measurable quantity, a parameter, a duration or moment, and the like, then variations are meant of approx. 20% or less, preferably approx. 10% or less, more preferably approx. 5% or less, even more preferably approx. 1% or less, and even more preferably approx. 0.1% or less than and of the quoted value, insofar as such variations are applicable in the described invention. However, it must be understood that the value of a quantity used where the term "about" or "around" is used, is itself specifically disclosed.

The terms "comprise," "comprising," "consist of," "consisting of," "provided with," "have," "having," "include," "including," "contain," "containing" are synonyms and are inclusive or open terms that indicate the presence of what follows, and which do not exclude or prevent the presence of other components, characteristics, elements, members, steps, as known from or disclosed in the prior art.

Quoting numerical intervals by endpoints comprises all integers, fractions and/or real numbers between the endpoints, these endpoints included.

In a first aspect, the invention relates to a method for optimizing liquid pharmachemical and/or fine chemical waste comprising organic solvents and noble metals, in particular platinum-group metals, such as platinum, palladium, rhodium and/or ruthenium, before processing it by means of a distillation installation comprising an evaporator, preferably a thin film evaporator.

In an embodiment, the liquid pharmachemical and/or fine chemical wastes also comprise water.

In a preferred embodiment, the liquid pharmachemical and/or fine chemical wastes originate from chemical processes using noble metals as catalysts, preferably homogeneous catalysts.

Examples of noble metals present in the liquid pharmachemical and/or fine chemical wastes of the present invention are ruthenium (Ru), rhodium (Rh), palladium (Pd), osmium (Os), iridium (Ir), platinum (Pt), gold (Au) and silver (Ag). In a preferred embodiment, the noble metals are noble metals belonging to the platinum-group metals, namely ruthenium (Ru), rhodium (Rh), palladium (Pd), osmium (Os), iridium (Ir), platinum (Pt). In a further preferred embodiment, the noble metals are selected from the list of: ruthenium (Ru), rhodium (Rh), palladium (Pd), platinum (Pt), or a combination thereof, preferably the noble metals are selected from the list of: ruthenium (Ru), and/or palladium (Pd), more preferably the noble metals are selected from the list of: ruthenium (Ru) or palladium (Pd).

In a preferred embodiment, the liquid pharmachemical and/or fine chemical wastes comprise palladium as noble metal.

In a preferred embodiment, the liquid pharmachemical and/or fine chemical wastes comprise ruthenium as noble metal.

Examples of organic solvents that may be present in the liquid pharmachemical and/or fine chemical waste are: aniline, acetic acid, acetone, acetonitrile, benzene, bromobenzene, butanol, butanone, chloroform, cyclohexane, cyclopentane, dichloromethane, diethyl ether, diglyme, 1,2-dimethoxyethane, dimethylformamide, dimethyl sulfoxide, dioxane, ethanol, ethyl acetate, ethylene bromide, ethylenediamide, isopropanol, isopropyl acetate, carbon tetrachloride, methanol, methyl isobutyl ketone, formic acid, morpholine, nitrobenzene, N-methylpyrrolidone, pentane, propanol, pyridine, tetrahydrofuran, toluene, and xylene.

In a preferred embodiment, the method comprises the steps of:
- introducing the liquid pharmachemical and/or fine chemical waste into a feed tank;
- adding one or more additives to the liquid pharmachemical and/or fine chemical waste;
- introducing the mixture of the liquid pharmachemical and/or fine chemical waste and the one or more additives into a distillation installation comprising an evaporator chosen from the list of: a thin film evaporator, a falling film evaporator, a short path evaporator, or a batch evaporator.

In a specific preferred embodiment, the one or more additives are one or more high-boiling solvents.

The term "high-boiling solvents", as used in the text, refers to solvents with a boiling point higher than that of the organic solvents present in the liquid waste, preferably a boiling point higher than 150°C. Examples of high-boiling solvents are: alcohols, polyols, glycol ethers, glycols, ethers, aldehydes, ketones, carboxylic acids, carboxylates, esters, aromatics, acyl groups, acyl halides, acid anhydrides, amines, amides, and nitriles. The high-boiling solvents enable gravity filling of the hot concentrated residual fraction.

In a preferred embodiment, the one or more high-boiling solvents are polar high-boiling solvents. This is advantageous because the polar high-boiling solvents then have the property to form hydrogen bonds. This is important to keep high-boiling components such as Active Pharmaceutical Ingredient (API), reaction by-products and noble metal compounds in solution. In a further preferred embodiment, the one or more high-boiling solvents are O-containing high-boiling solvents. In another or even further preferred embodiment, the one or more high-boiling solvents are halogen-containing high-boiling solvents. In a preferred embodiment, the one or more high-boiling solvents comprise alcohols, amides, or benzene derivatives, preferably aromatic alcohols, such as, for example, benzyl alcohol; polyols, glycols, such as, for example, diethylene glycol, diethylene glycol, dipropylene glycol, catechol, 2,2-dimethyl-1,3-propanediol, 1,2-butanediol and 2,2,4,4-tetramethyl-1,3-cyclobutanediol; glycol ethers, amides, such as, for example, N,N-dimethylimidazolidinone, N,N-dimethylformamide, N-methyl-2-pyrrolidone, N,N-dimethylacetamide; benzene derivatives, such as, for example, xylene, methoxybenzene, dichlorobenzene, and ethyl benzoate; or a combination thereof.

In a specific preferred embodiment, the one or more high-boiling solvents are glycols, preferably the one or more high-boiling solvents are one or more glycols selected from the list of: dipropylene glycol, catechol, 2,2-dimethyl-1,3-propanediol, 1,2-butanediol, diethylene glycol, 2,2,4,4-tetramethyl-1,3-cyclobutanediol, or a combination thereof.

In another preferred embodiment, the one or more high-boiling solvents are selected from the list of: N,N-dimethylimidazolidinone, benzyl alcohol, N,N-dimethylformamide, N-methyl-2-pyrrolidone, N,N-dimethylacetamide, dimethyl sulfoxide, xylene, methoxybenzene, dibutyl ether, dichlorobenzene, ethyl benzoate, diethylene glycol, dipropylene glycol, catechol, 2,2-dimethyl-1,3-propanediol, 1,2-butanediol and 2,2,4,4-tetra methyl-1,3-cyclobutanediol.

In a preferred embodiment, the additives are added in an amount of between 0.1 and 50 wt%, preferably between 0.1 and 35 wt%, even more preferably between 0.1 and 20 wt%, on the total mixture of liquid pharmachemical and /or fine chemical waste and additives.

According to a further preferred embodiment, the method comprises the steps of:
- screening of liquid pharmachemical and/or fine chemical waste comprising organic solvents and noble metals, in particular platinum-group metals, such as platinum, palladium, rhodium and/or ruthenium;
- introducing liquid waste into a feed tank;
- adding one or more additives to the liquid waste;
- introducing the mixture of liquid waste and one or more additives into a distillation installation comprising an evaporator chosen from the list of: a thin film evaporator, a falling film evaporator, a short path evaporator, or a batch evaporator, preferably a thin film evaporator.

The liquid waste is preferably supplied in a container containing a top and bottom connection.

The liquid pharmachemical and/or fine chemical waste can then be transferred from the container to the feed tank.

In case the liquid pharmachemical and/or fine chemical waste is supplied in a container, the liquid pharmachemical and/or fine chemical waste in the container can be sampled for screening according to many representative sampling procedures. Immersion vessels can be used to take the samples. The sampling instrument is lowered to the desired depth through a hatch of the liquid waste container, opened, held in position until full and retrieved. When sampling, equal amounts are taken from the top, middle and bottom layers of the container. Sampling can also be done using a sampling instrument with which samples are taken at several levels in the tanks, which are then thoroughly mixed to make a collective sample.

The sample can be analyzed for composition by means of many analytical methods. Non-limitative examples are ICP-AES analysis, oxygen combustion combined with ion chromatography, pH determination, GC-MS analysis, Karl Fischer determination, peroxide and nitro measurement, density determination and/or mixing test with water. A process simulation can also be carried out in a small-scale distillation installation whereby the composition of concentrate and distillate can then be analyzed by means of various analytical methods. Non-limitative examples are ICP-AES analysis, oxygen combustion combined with ion chromatography, pH determination, GC-MS analysis, Karl Fischer determination, peroxide and nitro measurement, density determination and/or mixing test with water.

In a preferred embodiment, the concentration of required high-boiling solvents is determined via an evaporation process simulation by means of a rotavapor.

In this embodiment, the liquid waste is then supplied to the feed tank by means of a discharge pump and a dip pipe. It is possible to add a solution containing between 18 and 22% sodium hydroxide during the supply of the liquid waste in the suction line of the discharge pump or after the supply of the liquid waste to the feed tank. This happens, for example, when the pH of the liquid waste is outside the pH range of the evaporator, preferably the thin film evaporator, during the screening of the liquid waste. This pH range is between pH 2 and 4. For this purpose, the waste is preferably also subjected to a compatibility test with [18-22]% sodium hydroxide and water. With the percentages stated above, percentages by weight are intended.

Once the contents of the container has been completely discharged into the feed tank, the pumping of the liquid waste is stopped, and one or more high-boiling solvents are added as additives to the liquid waste in the feed tank.

Alternatively, the liquid pharmachemical and/or fine chemical waste in the feed tank may be sampled for screening according to a variety of representative sampling procedures, as described above. The optional addition of an aqueous solution containing between 18 and 22% by weight of sodium hydroxide can also continue in the feed tank.

According to an embodiment, the mixture of liquid pharmachemical and/or fine chemical waste and additives is supplied from the feed tank to a distillation installation comprising an evaporator. The supply is preferably done by pumping. In a further embodiment, the evaporator is selected from the list of: a thin film evaporator, a falling film evaporator, a short path evaporator, or a batch evaporator, so that the mixture of liquid pharmachemical and/or fine chemical waste and additives is fed from the feed tank to a thin film evaporator, a falling film evaporator, a short path evaporator, or a batch evaporator, preferably a thin film evaporator.

In a preferred embodiment, the mixture of liquid pharmachemical and/or fine chemical waste and additives is pumped from the feed tank to the evaporator, wherein preferably an adjustable feed flow rate is set. The feed flow rate, with which the mixture is pumped from the feed tank to the evaporator, is preferably between 100 and 4000 kg/hour, more preferably between 200 and 3500 kg/hour, even more preferably between 300 and 3000 kg/hour, even more preferably between 400 and 2500 kg/hour, and most preferably between 500 and 2000 kg/hour.

From the feed tank, the waste is pumped to the evaporator, preferably the thin film evaporator, wherein preferably an adjustable feed flow rate is set. The thin-film evaporator is a hollow tube encased in a heating jacket, in which scrapers spread the waste products as a thin film over the heated surface of the jacket. Due to the contact of the thin film with the warm wall, the solvent evaporates easily, while the residue settles. In this way, the evaporation is optimized both in terms of efficiency and in terms of duration. In the evaporator, preferably the thin film evaporator, the heating takes place with reduced flow at a pressure between 1 and 16 barg, more preferably between 2 and 6 barg, even more preferably between 3 and 5 barg, even more preferably between 3.6 and 4.4 barg. Deposits of impurities in the liquid waste on the inside of the jacket of the thin film evaporator are prevented by means of scrapers present in the thin film evaporator.

In the evaporator chosen from the list of: thin film evaporator, falling film evaporator, short path evaporator, or batch evaporator, preferably the thin film evaporator, the liquid pharmachemical and/or fine chemical waste is separated into a vapor fraction and a residual fraction. In a preferred embodiment, the vapor fraction comprises the organic solvents. The vapor fraction may also comprise water in addition to organic solvents. This will apply if the liquid pharmachemical and/or fine chemical wastes comprise water. In another or further preferred embodiment, the residual fraction comprises the noble metals.

In an embodiment, the evaporator is part of a distillation installation which also comprises a condenser.

The vapor fraction comprising evaporated organic solvents, and optionally water, is preferably diverted from the evaporator to the condenser, where the vapor fraction or part of the vapor fraction is concentrated to a liquid distillate. In an embodiment, the liquid distillate is discharged to a distillate buffer vessel. The collected distillate can then be recycled for reuse of the organic solvents in the pharmachemical and/or fine chemical industry. The distillate can also be burned for energy recovery.

In a preferred embodiment, a distillate is formed in the condenser, which is used for the recovery of organic solvents. The distillate can also be burned for energy recovery.

In an embodiment, between 60 and 99.9 wt% of the liquid pharmachemical and/or fine chemical waste ends up in the distillate.

In an embodiment, in the evaporator, preferably the thin film evaporator, the vapor fraction comprising evaporated organic solvents is diverted to a condenser, from which the liquid distillate is discharged. The collected distillate can then be recycled for reuse of the organic solvents in the pharmachemical and/or fine chemical industry. The distillate can also be burned for energy recovery.

The concentrated residual fraction comprising noble metals, in particular platinum-group metals, such as platinum, palladium, rhodium and/or ruthenium, formed after evaporation is preferably collected at the bottom of the evaporator, preferably the thin film evaporator. The residual fraction can then be discharged in the waste drums for further reprocessing or upgrading.

Further reprocessing may include thermal treatment of the residual fraction, such as for example incineration in a furnace, where metals are converted to metal oxides which are then present in a resultant ash. Afterwards, the metal oxides can be purified from the ash and converted back into metals for reuse as a catalyst. It should be understood that this is only an example and that essentially all possible reprocessing methods can be used in the present invention.

This method is advantageous because by adding one or more high-boiling solvents to liquid pharmachemical and/or fine chemical waste comprising organic solvents and noble metals, in particular platinum-group metals, such as platinum, palladium, rhodium and/or ruthenium, prior to its processing in an evaporator, preferably a thin film evaporator, the residual fraction is kept liquid in the evaporator, preferably the thin film evaporator. This method is particularly advantageous because the residual fraction in which the noble metals precipitate is kept liquid, as a result of which fewer residues stick to the parts of the evaporator, preferably the thin film evaporator, the residual filling is promoted and the further reprocessing of the residual fraction is facilitated. Moreover, the addition of one or more high-boiling solvents has little influence on the composition of the vapor fraction and its possible sequential upgrading to reusable organic solvents. Moreover, high-boiling solvents will not hinder the further reprocessing or upgrading of the residual fraction, as this often involves incineration.

According to an embodiment, the high-boiling solvents are high-boiling organic or inorganic solvents, preferably they are high-boiling organic solvents.

According to an embodiment, the concentrated residual fraction has a maximum temperature of 180°C, preferably a maximum of 150°C. This depends on the operating temperature of the distillation installation and ensures that the residual fraction has a temperature low enough for the one or more high-boiling solvents to keep the residual fraction liquid.

According to an embodiment, the evaporator, preferably the thin film evaporator, operates at a temperature between 100 and 220°C, preferably a temperature between 120 and 200°C, more preferably a temperature between 150 and 180°C. It is important that the evaporator, preferably the thin film evaporator, operates in a wide temperature range so that all types of organic solvents and combinations of solvents, and optionally water, can be evaporated, but that the operating temperature is lower than the boiling point of the one or more added high-boiling solvents.

According to an embodiment, the one or more added high-boiling solvents have a boiling point higher than that of the organic solvents present in the liquid waste. The purpose of the high-boiling solvents is to preserve the liquid matrix of the residual fraction during evaporation, where the higher boiling point prevents these high-boiling solvents from evaporating in the evaporator, preferably the thin film evaporator, and thus ending up in the vapor fraction.

According to a preferred embodiment, during screening by means of GC-MS, it is determined which organic solvents are present in the liquid waste is in order to determine which high-boiling solvents are added. The GC-MS determination is advantageous because the determination of the number and type of organic solvents present in the liquid waste allows to determine the operating temperature of the evaporator, preferably the thin film evaporator, based on the boiling points of the organic solvents. The operating temperature is preferably higher than the highest boiling point present in the liquid waste and the boiling point of the one or more added high-boiling solvents must also be higher than the operating temperature of the evaporator, preferably the thin film evaporator. Depending on the organic solvents present in the liquid waste, it is determined which high-boiling solvents are added.

According to an embodiment, during screening by ICP-AES, the concentration of noble metals, more specifically platinum-group metals, such as platinum, palladium, rhodium and/or ruthenium, and other dissolved elements is determined to determine the amount in which the one or more high-boiling solvents should be added. The larger the fraction of noble metals and impurities present in the liquid waste, the more high-boiling solvents must be added to keep the residual fraction liquid.

According to an embodiment, a circulation pump in the feed tank provides a homogenized feed stream to the evaporator, preferably the thin film evaporator. According to another or further embodiment, an agitator in the feed tank provides a homogenized feed stream to the evaporator selected from: thin film evaporator, falling film evaporator, short path evaporator, or batch evaporator, preferably the thin film evaporator. This is advantageous for mixing the one or more added high-boiling solvents with the liquid waste, so that the noble metals to be recovered are already distributed over the organic solvents present in the liquid waste and the one or more added high-boiling solvents prior to evaporation.

According to an embodiment, the one or more high-boiling solvents are added by means of a separate pump and discharge line.

In a preferred embodiment, the evaporator operates at a pressure of between 0 and 100 mbarg, so that little energy has to be supplied to keep the evaporator under pressure and the risk of explosions is also reduced.

According to a specific preferred embodiment, the method is a method for optimizing liquid pharmachemical and/or fine chemical waste comprising organic solvents and noble metals, in particular platinum-group metals, such as platinum, palladium, rhodium and/or ruthenium, comprising the following sequential steps:
- screening the liquid waste by composition,
- introducing the liquid waste into a feed tank,
- adding one or more additives to the liquid waste, and
- introducing the mixture of liquid waste and one or more additives into a distillation installation comprising a thin film evaporator,
wherein the liquid waste is converted in the thin film evaporator into a vapor fraction comprising organic solvents and a concentrated residual fraction comprising noble metals, in particular platinum-group metals, such as platinum, palladium, rhodium and/or ruthenium, wherein the one or more additives are one or more high-boiling solvents, suitable for keeping the residual fraction liquid during the evaporation in the thin film evaporator.

According to a specific preferred embodiment, the method is a method for optimizing liquid pharmachemical and/or fine chemical waste comprising organic solvents and palladium, comprising the following sequential steps:
- screening the liquid waste by composition,
- introducing the liquid waste into a feed tank,
- adding one or more additives to the liquid waste, and
- introducing the mixture of liquid waste and one or more additives into a distillation installation comprising a thin film evaporator,
wherein the liquid waste is converted in the evaporator into a vapor fraction comprising organic solvents and a concentrated residual fraction comprising palladium, wherein the one or more additives are one or more high-boiling solvents, suitable for keeping the residual fraction liquid during the evaporation in the evaporator, selected from the list of alcohols, amides, or benzene derivatives, preferably aromatic alcohols, such as, for example, benzyl alcohol; polyols, glycols, such as, for example, diethylene glycol, diethylene glycol, dipropylene glycol, catechol, 2,2-dimethyl-1,3-propanediol, 1,2-butanediol and 2,2,4,4-tetramethyl-1,3-cyclobutanediol; glycol ethers, amides, such as, for example, N,N-dimethylimidazolidinone, N,N-dimethylformamide, N-methyl-2-pyrrolidone, N,N-dimethylacetamide; benzene derivatives, such as, for example, xylene, methoxybenzene, dichlorobenzene, and ethyl benzoate; or a combination thereof.

According to a specific preferred embodiment, the method is a method for optimizing liquid pharmachemical and/or fine chemical waste comprising organic solvents and ruthenium, comprising the following sequential steps:
- screening the liquid waste by composition,
- introducing the liquid waste into a feed tank,
- adding one or more additives to the liquid waste, and
- introducing the mixture of liquid waste and one or more additives into a distillation installation comprising a thin film evaporator,
wherein the liquid waste is converted in the evaporator into a vapor fraction comprising organic solvents and a concentrated residual fraction comprising ruthenium, wherein the one or more additives are one or more high-boiling solvents, suitable for keeping the residual fraction liquid during the evaporation in the evaporator, selected from the list of alcohols, amides, or benzene derivatives, preferably aromatic alcohols, such as, for example, benzyl alcohol; polyols, glycols, such as, for example, diethylene glycol, diethylene glycol, dipropylene glycol, catechol, 2,2-dimethyl-1,3-propanediol, 1,2-butanediol and 2,2,4,4-tetramethyl-1,3-cyclobutanediol; glycol ethers, amides, such as, for example, N,N-dimethylimidazolidinone, N,N-dimethylformamide, N-methyl-2-pyrrolidone, N,N-dimethylacetamide; benzene derivatives, such as, for example, xylene, methoxybenzene, dichlorobenzene, and ethyl benzoate; or a combination thereof.

In a second aspect, the present invention relates to a use of a method according to the first aspect for optimizing liquid pharmachemical and/or fine chemical waste prior to its processing by means of an evaporator, preferably a thin film evaporator.

This use results in an ecologically and economically advantageous optimization of liquid pharmachemical and/or fine chemical waste, more particularly liquid waste comprising organic solvents and noble metals. The use allows to optimize a specific pharmachemical and/or fine chemical waste stream prior to processing in an evaporator, preferably a thin film evaporator, so that both organic solvents and noble metals, more in particular platinum-group metals, such as platinum, palladium, rhodium and/or ruthenium can be optimally recovered.

### EXAMPLES

### Examples 1-10

A liquid waste stream comprising butanol, water, methyl tert-butyl ether (MTBE) and diisopropylethylamine, palladium and high-boiling components such as Active Pharmaceutical Ingredient (API) and reaction by-products, originating from a process that uses noble metals as a homogeneous catalyst, is fed to a feed tank.

Additives are added to the feed tank according to Table 1. The amount of additive is expressed in wt% in relation to the total amount of additives and waste.

**TABLE 1**

| | additive | boiling point | Quantity |
|---|---|---|---|
| Example 1 | N,N-dimethylimidazolidinone | 225°C | 9 wt% |
| Example 2 | dipropylene glycol | 230.5°C | 10 wt% |
| Example 3 | benzyl alcohol | 205°C | 15 wt% |
| Example 4 | N,N-dimethylformamide | 153°C | 10 wt% |
| Example 5 | N-methyl-2-pyrrolidone | 202°C | 0.5 wt% |
| Example 6 | N,N-dimethylacetamide | 165°C | 3 wt% |
| Example 7 | dimethyl sulfoxide | 189°C | 13 wt% |
| Example 8 | xylene | 138-144°C | 8 wt% |
| Example 9 | 2,2-dimethyl-1,3-propanediol | 208°C | 18 wt% |
| Example 10 | diethylene glycol | 245°C | 6 wt% |

The content of the feed tank, comprising the waste stream and the additives, is supplied to an evaporator. In the evaporator, the content is separated into a vapor fraction and a residual fraction. The residual fraction remains liquid and presents no problems when it is filled from the evaporator. The residual fraction is collected and used for the recovery of noble metals, for example by incineration of the residual fraction. It was found that the additives did not pose a problem during processing of the residual fraction.

The vapor fraction is diverted to a condenser, where at least part of the gases are condensed and form a distillate. The distillate can be burned for energy recovery, sold as distillate or used for the purification of organic solvents.

## Claims

1. Method for optimizing liquid pharmachemical and/or fine chemical waste comprising organic solvents and noble metals, in particular platinum-group metals, such as platinum, palladium, rhodium and/or ruthenium, comprising the following sequential steps:
- screening the liquid waste by composition,
- introducing the liquid waste into a feed tank,
- adding one or more additives to the liquid waste, and
- introducing the mixture of liquid waste and one or more additives into a distillation installation comprising an evaporator chosen from the list of: a thin film evaporator, a falling film evaporator, a short path evaporator, or a batch evaporator,
wherein the liquid waste is converted in the evaporator into a vapor fraction comprising organic solvents and a concentrated residual fraction comprising noble metals, in particular platinum-group metals, such as platinum, palladium, rhodium and/or ruthenium, **characterized in, that** the one or more additives are one or more high-boiling solvents, suitable for keeping the residual fraction liquid during the evaporation in the evaporator.

2. Method according to claim 1, **characterized in, that** the one or more high-boiling solvents have a boiling point higher than that of the organic solvents present in the liquid waste.

3. Method according to claim 1 or 2, **characterized in, that** the concentrated residual fraction has a maximum temperature of 180°C.

4. Method according to any of the preceding claims 1-3, wherein the one or more high-boiling solvents are selected from the list of: aromatic alcohols, polyols, glycols, glycol ethers, amides, or a combination thereof.

5. Method according to any of the preceding claims 1-3, **characterized in, that** the one or more high-boiling solvents are one or more glycols.

6. Method according to any of the preceding claims 1-3, wherein the one or more high-boiling solvents are one or more amides.

7. Method according to any of the preceding claims 1-3, wherein the one or more high-boiling solvents are selected from the list of: N,N-dimethylimidazolidinone, benzyl alcohol, N,N-dimethylformamide, N-methyl-2-pyrrolidone, N,N-dimethylacetamide, dimethyl sulfoxide, xylene, methoxybenzene, dibutyl ether, dichlorobenzene, ethyl benzoate, diethylene glycol, dipropylene glycol, catechol, 2,2-dimethyl-1,3-propanediol, 1,2-butanediol and 2,2,4,4-tetramethyl-1,3-cyclobutanediol.

8. Method according to any of the preceding claims, wherein the evaporator is a thin film evaporator.

9. Method according to any of the preceding claims, wherein the noble metals comprise ruthenium.

10. Method according to any of the preceding claims, wherein the noble metals comprise palladium.

11. Method according to any of the preceding claims, wherein the liquid pharmachemical and/or fine chemical wastes originate from chemical processes using noble metals as catalysts, preferably homogeneous catalysts.

12. Method according to any of the preceding claims, wherein the additives are added in an amount of between 0.1 and 20 wt%, expressed as additives on the total mixture of liquid pharmachemical and/or fine chemical waste and additives.

13. Method according to any of the preceding claims 1-8, **characterized in, that** during the screening by means of ICP-AES the concentration of noble metals, more specifically platinum-group metals, such as platinum, palladium, rhodium and/or ruthenium, is determined in order to determine the amount in which the one or more high-boiling solvents should be added.

14. Method according to any of the preceding claims 1-9, **characterized in, that** a circulation pump in the feed tank provides a homogenized feed flow to the evaporator.

15. Use of a method according to any of claims 1-14 for optimizing supplied liquid waste prior to processing by evaporation.
